# EUROPEAN PATENT APPLICATION

(11) **EP 1 613 078 A1**
(43) Date of publication of application: **04.01.2006**
(21) Application number: 04712190.0
(22) Date of filing: 18.02.2004
(51) Int. Cl.: H04N 5/92, G06F 12/00, G06F 12/14, H04L 9/14

(54) **ENCRYPTION DEVICE, DECRYPTION DEVICE, AND DATA REPRODUCTION DEVICE**

(30) Priority: 07.03.2003 JP 2003061460
(71) Applicant: MATSUSHITA ELECTRIC INDUSTRIAL CO., LTD., Kadoma-shi, Osaka 571-8501 (JP)
(72) Inventor: MATSUI, Yoshinori, Ikoma-shi, Nara, 630-021 (JP)
(74) Representative: Pautex Schneider, Nicole Véronique
(86) International application number: PCT/JP2004/001771
(87) International publication number: WO 2004/080070

(57) **Abstract**

An encrypting apparatus 100 is composed of: a file reading unit 101 which obtains a file made up of a data section (mdat) including at least one of encoded image data, audio data, text data and a header section (moov) including a header of the data section; a data encrypting unit 106 which encrypts at least one of the sets of data included in the data section of the file; a header analyzing unit 102 which analyzes the header section of the file and obtains a value of a field (EINFO) that is included in the header section to show an encoding method used for data to be encrypted by the data encrypting unit 106; a header converting unit 104 which converts the obtained value according to a predetermined conversion rule and replaces the value in the field with the converted value; and a file outputting unit 105 which outputs a file made up of a header section (moov') including a field (EINFO') in which the value has been replaced and a data section (encrypted mdat) including the encrypted data.

## Description

### Technical Field

The present invention relates to a decrypting apparatus and an encrypting apparatus which respectively decrypt and encrypt encrypted and unencrypted data files stored in a data server or a memory and then move the respective data files to another data server or memory. It also relates to a data reproducing apparatus which inputs encrypted and unencrypted data files to decode and reproduce them. In general, the expression of decoding is used as a concept opposed to encryption. Note that, however, the expression of decoding is used as a concept opposed to encoding in the present specification. For this reason, an explanation will be given using the expression of decryption as a concept opposed to encryption.

### Background Art

As the international standard for multiplexing digital data such as video, audio, and text data, there are file formats standardized by, for example, the ISO/MPEG (International Organization Standardization / Moving Picture Experts Group) and the 3GPP (The Third Generation Partnership Project) which is a group defining the international standard of the third generation mobile W-CDMA communication (ISO/IEC14496-12, ISO/IEC 14496-14, and 3GPP TS26.234, for example).

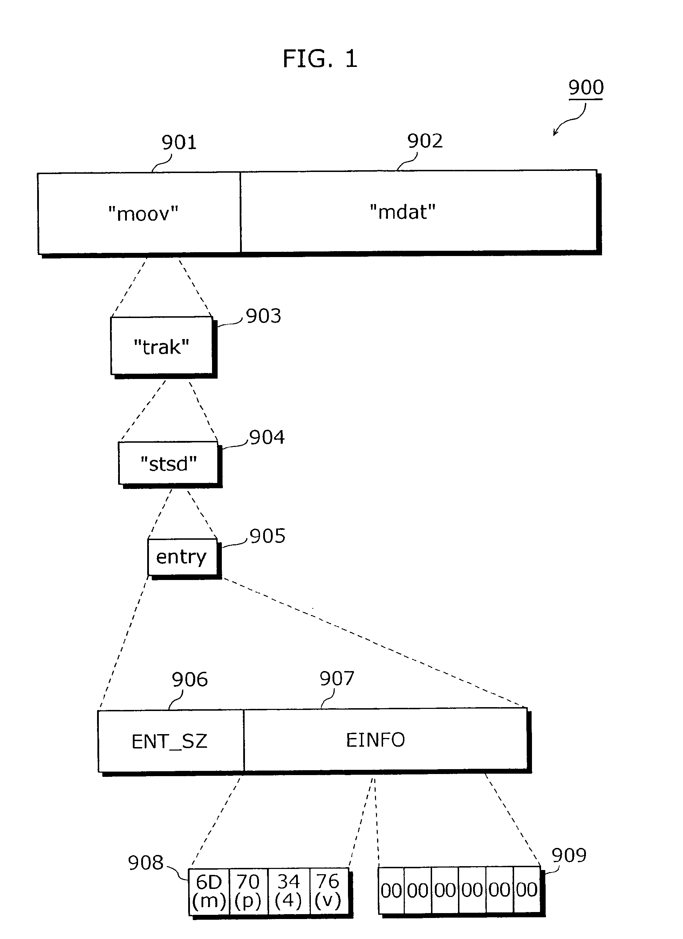

FIG. 1 shows an example of a file structure defined by the above-stated standard.

As shown in FIG. 1, a file 900 is composed of a header section ("moov") 901 and a data section ("mdat") 902.

The header section 901 includes track boxes ("trak") 903, the number of which is equal to or more than the number of media of multiplexed digital data. Each track box 903 includes one sample description information storage box ("stsd") 904. The sample description information storage box 904 includes at least one entry ("entry") 905. The entry 905 is, in turn, composed of an entry size (ENT_SZ) 906, an entry information (EINFO) 907, and other fields. The entry information 907 includes an entry type (ENT_TP) 908 and a reservation field (RSV_6) 909.

The entry size 906 is a field for designating the size of the entry 905 by the number of bytes.

The entry type 908 is a field for indicating a method of encoding digital data. For example, in the entry type 908 according to the above-stated standard: 0x6D703476 (mp4v) will be described in the case of the MPEG4 video encoding method; 0x6D703461 (mp4a) will be described in the case of the MPEG4 audio encoding method; 0x73323633 (s263) will be described in the case of the ITU-T H. 263 video encoding method; 0x73616D72 (samr) will be described in the case of the AMR audio encoding method; and 0x74783367 (tx3g) will be described in the case of the time text encoding method.

The reservation field 909 is a field which is reserved as an extended area for the future, and is provided in preparation for standard revision or the like.

The data section 902 stores multiplexed digital data, such as image, audio, and text data. Here, access information of each set of data is given in the track box 903 as an offset value measured in bytes from the beginning of the file 900. For example, suppose that the access information of a certain set of image data is designated as 12,450 bytes in the track box 903. In this case, the corresponding image data is stored in a position located 12,450 bytes measured from the beginning of the file 900.

Incidentally, transmission of high-quality moving picture data has become possible owing to the widespread use of broadband networks in recent years. On account of this, transmission services for moving picture data are provided on a chargeable basis. For a case of providing a transmission service for moving picture data with superior audio-visual value, data encryption is essential in view of protection of the right of intangible property such as a copyright. Suggestions are now made for the ISO/MPEG, etc. to establish a standard of a file format for storing encrypted data.

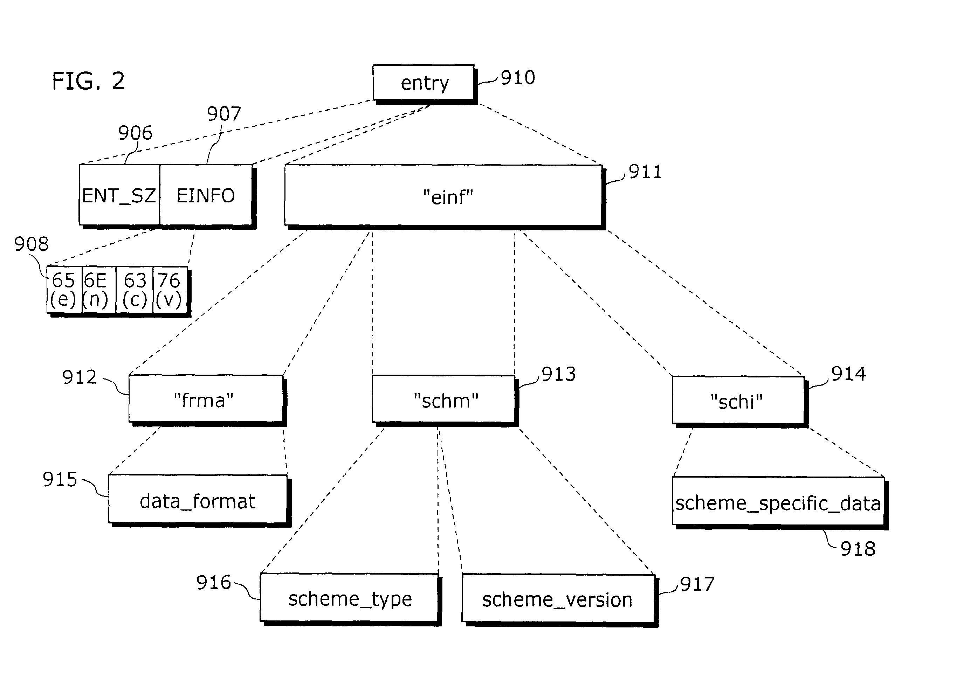

FIG. 2 shows a part of a data structure in a conventional encryption file format currently suggested for the ISO/MPEG. It should be noted that the data structure of this conventional encryption file format is disclosed in Japanese Laid-Open Patent Application No. 2002-304805, for example.

As shown in FIG. 2, the suggestion is made for the conventional encryption file format so that a data structure referred to as an encrypted information box ("einf") 911 is added to the entry 910. According to this format, 0x656E6376 (encv) is described in common instead of mp4v, s263, etc. which are described in the conventional entry type 908 by the video encoding method, and 0x656E6361 (enca) is described in common instead of mp4a, samr, etc. which are described in the conventional entry type 908 by the audio encoding method.

After encryption, the entry type 908 is summarized as encv, enca, etc. However, mp4v, samr, etc. described in the original entry type 908, that is, the entry type 908 before encryption, will be described in a data format field 915 of an original format box ("frma") 912 in the "einf" 911.

Accordingly, an encoding method can be determined by reference to this data format field 915. Also, it becomes possible to determine the presence or absence of encryption by reference to the entry type 908 in which specific encv, enca, or the like is described. In a case where encryption has been performed, information indicating the encrypting method is required. As to this, the information is described using a scheme type field 916 and a scheme version field 917 of a scheme box ("schm") 913 included in the "einf" 911. By reference to these fields, the encoding method and its version can be determined. In addition to this, the "einf" 911 includes a scheme information box 914 which has a scheme specifying data field 918.

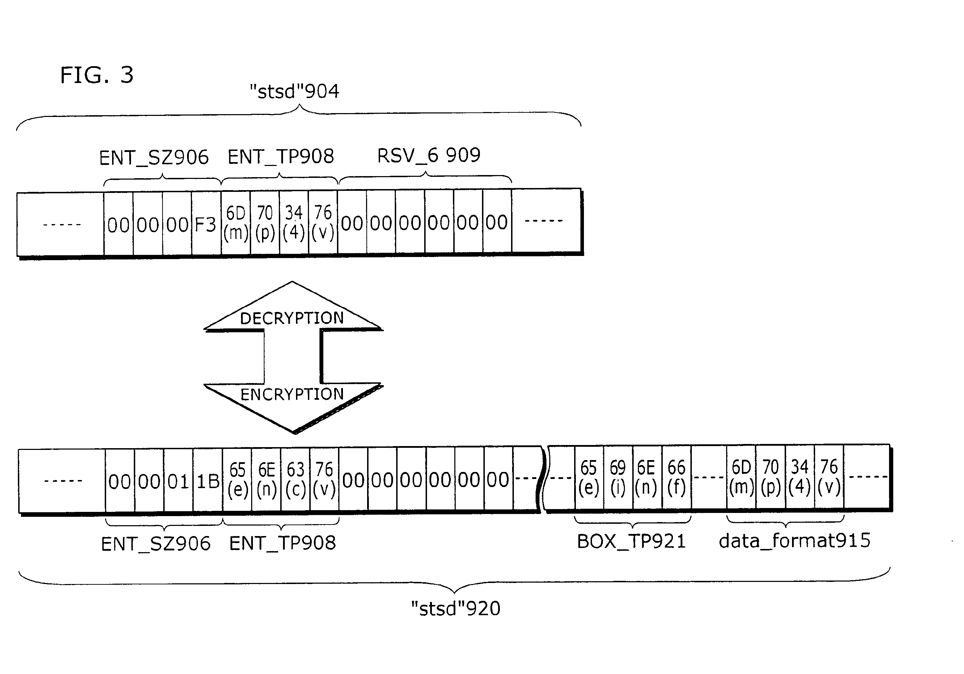

FIG. 3 is a diagram for explaining a difference in the header section of a file in a case where a certain unencrypted file is encrypted using the above-stated encryption file format.

In FIG. 3, the "stsd" 904 before encryption (i.e., unencrypted stsd) and an "stsd" 920 after encryption (i.e., encrypted stsd) are shown. The unencrypted entry size 906 is indicated as 0x000000F3 (the decimal number 243), that is, 243 bytes. The unencrypted entry type 908 is indicated as 0x6D703476 (mp4v). Meanwhile, the encrypted entry size 906 is indicated as 0x0000011B (the decimal number 283), that is, 283 bytes. The encrypted entry type 908 is indicated as 0x656E6376 (encv). Moreover, an "einf" 911 is added to the encrypted "stsd" 920 and 0x65696E66 (einf) is described in a box type (BOX_TP) field 921 of the "einf" 911. Furthermore, 0x6D703476 (mp4v) described in the unencrypted entry type 908 is duplicated into the data format field 915 of the "frma" 912 included in the "einf" 911.

Using the stated conventional file format, however, the data size of the header section is changed before and after encryption. For this reason, all sets of the access information of the digital data have to be updated, and this causes various problems.

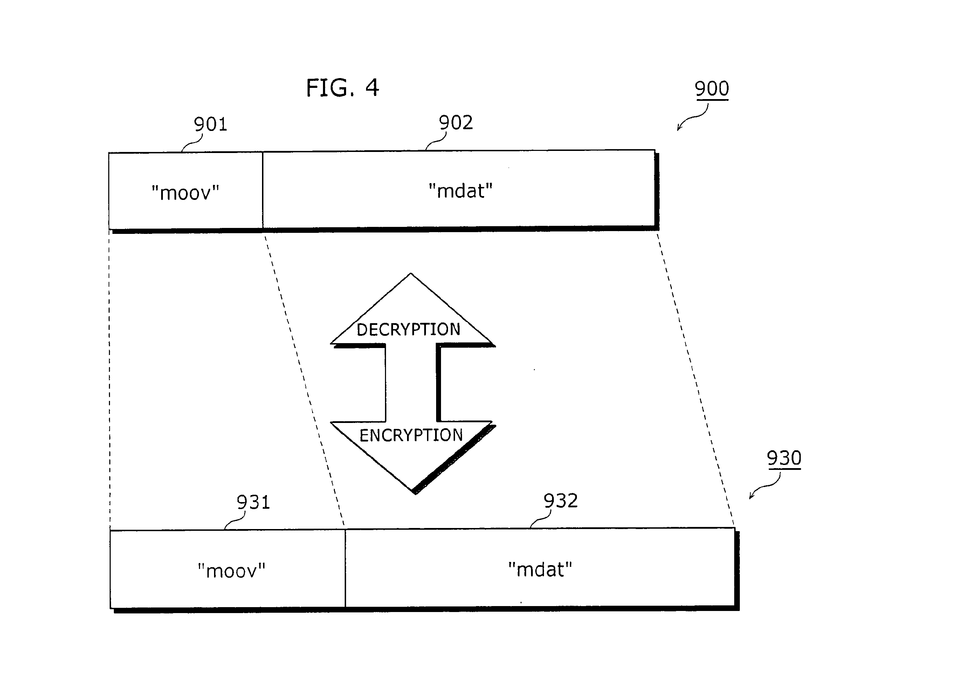

A more specific explanation is given as follows. When an unencrypted file is encrypted, the "einf" 911 is added. As shown in FIG. 4, a difference is caused in size between the header section 901 and the header section 931, before and after encryption. On this account, the file size is different between the file 900, i.e., the file before encryption, and the file 930, i.e., the file after encryption.

Thus, the encrypting apparatus and the decrypting apparatus need to perform processing for re-generating a header section in addition to performing the encryption and decryption processing. This leads to a problem that the processing loads of the encrypting apparatus and decrypting apparatus will be increased.

As has been mentioned, the access information of each set of data is given in the field included in the track box 903, as an offset value measured from the beginning of the file. However, as to an encrypted file, the size of the header section 931 preceding the data section 932 is increased, so that the starting position of the data section 932 is shifted.

For this reason, when converting the unencrypted file 900 into the encrypted file 930 or converting the encrypted file 930 into the unencrypted file 900, the encrypting apparatus and decrypting apparatus will have a problem of updating all the sets of the access information of the data. In addition, this update of the access information of the data includes updating tracks which are not objects of the encryption and decryption processing even when only a part of a track is selected and the encryption and decryption processing is performed on it.

Particularly if an optical disc, such as a DVD, is used as a medium for recording files (a DVD recorder, for example), another problem is caused that a recording position of digital data on the optical disk has to be changed because the file size is changed due to the encryption or decryption of the file.

Moreover, if file size information is managed for each file according to the standard of a memory card, it would also be necessary to update the management information due to the change in the file size.

The present invention is conceived in view of these problems, and it is an object of the present invention to provide an encrypting apparatus which can encrypt unencrypted data without changing the file size. It is another object of the present invention to provide a decrypting apparatus which can decrypt encrypted data without changing the file size.

### Disclosure of Invention

To achieve the above-stated objects, an encrypting apparatus of the present invention for encrypting at least one of encoded image data, audio data, and text data is made up of: a file reading unit operable to obtain a file which has a data section including the encoded image data, audio data, and text data and a header section including a header of the data section; an encrypting unit operable to encrypt at least one of the encoded image data, audio data, and text data included in the data section of the file; a header analyzing unit operable to analyze the header section of the file and to obtain a value described in a field that is included in the header section to show an encoding method used for data to be encrypted by the encrypting unit; a header converting unit operable to convert the obtained value according to a predetermined conversion rule and to replace the value described in the field with the converted value; and a file outputting unit operable to output a file having a header section including a field in which the value has been replaced and a data section including the encrypted data. With this structure, when the encoded data is to be encrypted, the value described in the field that is included in the header of the file to indicate the encoding method is replaced according to the predetermined rule. On account of this, the encoding method employed before encryption and the presence/absence of encryption can be specified in the header of the file, with the size of the header of the file not being changed. Moreover, it is unnecessary to re-generate the header section or to change the recording position of data. Therefore, the apparatus requires less processing load.

Here, it is preferable that the header converting unit is operable to convert the obtained value through a bit inversion. Moreover, it is preferable that the header converting unit is operable to change a bit position in the obtained value at which the bit inversion is to be performed, according to an encrypting method used by the encrypting unit. Also, it is preferable that the header converting unit is operable to change a bit inversion formula to be used for the bit inversion, according to an encrypting method used by the encrypting unit. With this structure, the position at which the bit inversion is performed or the bit inversion formula can be changed depending on the encrypting method. Thus, it becomes possible to specify the encrypting method, the version number of the encrypting method, etc. in the header of the file, with the file size not being changed.

A decrypting apparatus of the present invention for decrypting encrypted data, the encrypted data being at least one of encoded image data, audio data, and text data, is made up of: a file reading unit operable to obtain a file which has a data section including the encoded image data, audio data, and text data and a header section including a header of the data section; a header analyzing unit operable to analyze the header section of the file and to obtain a value described in a field that is included in the header section to show an encoding method used for the encrypted data and information regarding encryption; a header converting unit operable to convert the obtained value according to a predetermined conversion rule and to replace the value described in the field with the converted value; a decrypting unit operable to decrypt the encrypted data out of the encoded image data, audio data, and the text data included in the data section of the file; and a file outputting unit operable to output a file having a header section including a field in which the value has been replaced and a data section including the decrypted data. With this structure, the value described in the field that is included in the header of the file to indicate the encoding method and the information regarding encryption is rewritten into the field indicating the encoding method, according to the predetermined rule. On account of this, the encrypted data can be decrypted, with the file size not being changed.

It should be noted that the present invention can be realized not only as such an encrypting apparatus and a decrypting apparatus, but also as a data reproducing apparatus which decodes encoded data through decryption so as to reproduce it. Moreover, the present invention can be realized as an encrypting method, a decrypting method, and a data reproducing method which respectively include steps corresponding to the characteristic units provided for such an encrypting apparatus, a decrypting apparatus and a data reproducing apparatus. Furthermore, the present invention can be realized as a program which causes a computer to execute these steps. It should be understood that this program can be distributed via a recording medium such as a CD-ROM or a transmission medium such as the Internet.

As described so far, using the encrypting apparatus of the present invention, the encoding method employed before encryption, the presence/absence of encryption, the encrypting method, and the version number of the encrypting method are specified by replacing the value of the field that is included in the header of the file to indicate the encoding method according to the predetermined rule. On account of this, unencrypted data can be encrypted, with the file size not being changed. Moreover, recording position of data, such as image, audio, and text data, measured from the beginning of the file is not changed. Thus, it is unnecessary to update the access information of the data. Furthermore, since only a part of the header section needs to be replaced, the processing load of the header section can be substantially reduced as compared with a case of an encrypting apparatus operating according to the conventional file format standard. Moreover, a recording position of data does not need to be changed even in a case where a file on an optical disk is to be encrypted. Thus, various effects can be expected. For example, it would be unnecessary to update the management information holding the file size information that is possibly required according to the standard of a memory card.

Also, using the decrypting apparatus of the present invention, the value of the field that is included in the header of the file to indicate the encoding method and information regarding encryption is replaced according to the predetermined rule. The file size is not changed before and after the decryption of the encrypted data, so that the processing load of the header section can be substantially reduced.

Moreover, using the data reproducing apparatus of the present invention, even if an encrypted file is inputted, the encryption determining unit can determine the presence/absence of encryption and the encoding method by reference to one data field. For the header analysis processing, the conventional method can be used to convert the conventional file format before encryption into a compatible format. Thus, as an effect, a data reproducing apparatus can be provided at a low cost in comparison with the conventional apparatus.

### Brief Description of Drawings

FIG. 1 shows an example of a conventional file structure defined by the standard.
FIG. 2 shows a part of a data structure in a conventional encryption file format.
FIG. 3 is a diagram for explaining a difference in a header section of a file in a case where an unencrypted file is encrypted in the conventional encryption file format.
FIG. 4 is a diagram for explaining a difference in file size between before and after encryption.
FIG. 5 is a block diagram showing a functional structure of an encrypting apparatus of a first embodiment of the present invention.
FIG. 6A is a diagram showing a first example of a conversion table.
FIG. 6B is a diagram showing a second example of the conversion table.
FIG. 6C is a diagram showing a third example of the conversion table.
FIG. 7 is a flowchart showing a first example of a processing operation performed by a header converting unit of the encrypting apparatus.
FIG. 8 is a diagram showing a comparison of a file before encryption and a file after encryption processing performed by the encrypting apparatus 100.
FIG. 9 is a diagram showing a comparison of a file before encryption and a file after a second encryption processing performed by the encrypting apparatus 100.
FIG. 10 shows an example of a bit inversion table.
FIG. 11 is a flowchart showing a second example of the processing operation performed by the header converting unit of the encrypting apparatus.
FIG. 12 is a diagram showing a comparison of an entry type before bit inversion and an entry type after bit inversion.
FIG. 13 is a block diagram showing a functional structure of a decrypting apparatus of a second embodiment.
FIG. 14 is a flowchart showing a first example of a processing operation performed by a header converting unit of the decrypting apparatus
FIG. 15 is a flowchart showing a second example of the processing operation performed by the header converting unit of the decrypting apparatus.
FIG. 16 is a block diagram showing a functional structure of a data reproducing apparatus of a third embodiment of the present invention.
FIG. 17 is a flowchart showing a processing operation performed by an encryption determining unit of the data reproducing apparatus.
FIG. 18 shows an application example of the encrypting apparatus, the decrypting apparatus, and the data reproducing apparatus of the present invention.

### Best Mode for Carrying Out the Invention

An encrypting apparatus, a decrypting apparatus, and a data reproducing apparatus of the present invention operate based on a data format in which the presence/absence of encryption and an encoding method required to decrypt an encrypted file can be determined, while keeping the header size and the file size unchanged between encryption and decryption of data section according to the ISO/MPEG file format (MP4 file format).

The following is a description of embodiments of the present invention, with reference to the drawings. It should be note that an explanation will be given mainly using image data as data which is to be encrypted or decrypted in the embodiments. However, this has no intention of excluding encryption and decryption of other kinds of media data, such as audio data and text data.

### (First Embodiment)

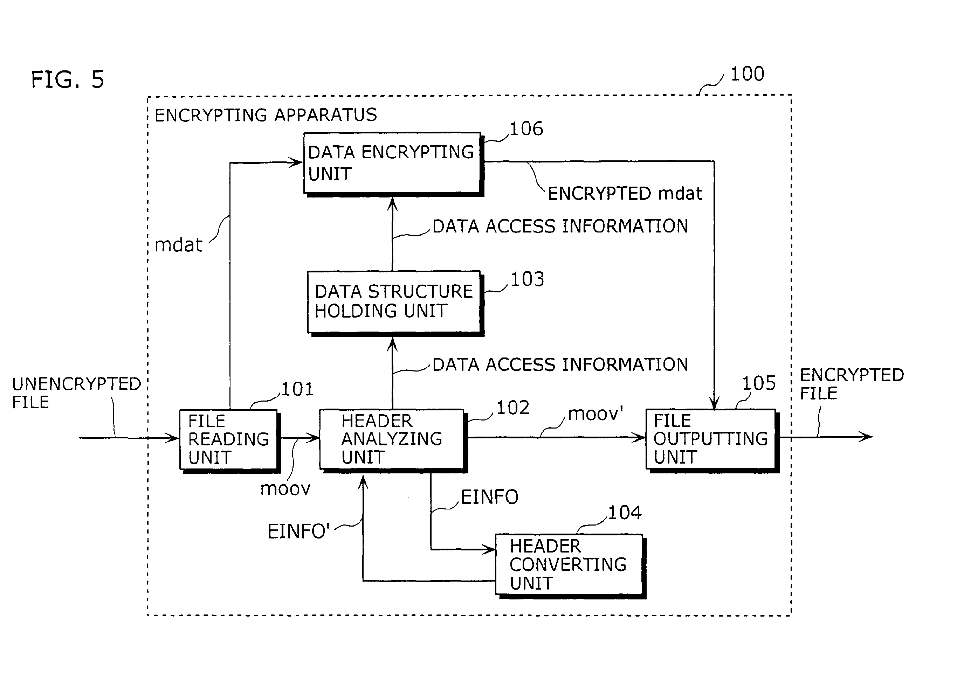

First, an encrypting apparatus of the first embodiment of the present invention is explained, with reference to FIG. 5 to FIG. 12.

FIG. 5 is a block diagram showing a functional structure of the encrypting apparatus of the first embodiment.

As shown in FIG. 5, an encrypting apparatus 100 is composed of a file reading unit 101, a header analyzing unit 102, a data structure holding unit 103, a header converting unit 104, a file outputting unit 105, and a data encrypting unit 106.

The file reading unit 101 is a processing unit for inputting a file which is not encrypted (i.e., an unencrypted file) that stores data, such as image, audio, and text data, according to an MP4 file format. The file reading unit 101 reads an unencrypted file following an instruction from the header analyzing unit 102, and then outputs a header section ("moov") of the file to the header analyzing unit 102.

The header analyzing unit 102 is a processing unit for analyzing the "moov", and outputs an EINFO of each entry included in the "moov" to the header converting unit 104 as well as outputting access information (data access information) of data, such as image, audio, and text data, stored in the unencrypted file to the data structure holding unit 103. Moreover, the header analyzing unit 102 obtains an EINFO', which can be obtained by converting the EINFO, from the header converting unit 104. Then, the header analyzing unit 102 generates a "moov"' that includes the EINFO', and outputs it to the file outputting unit 105.

The data structure holding unit 103 is a memory, such as a DRAM or an SDRAM, for holding the data access information indicating respective storage locations of data, such as image, audio, and text data, with the locations being measured from the beginning of the file.

The header converting unit 104 is a processing unit for converting an EINFO into an EINFO' so as to determine the presence or absence of encryption and the encoding method. The header converting unit 104 is provided with a conversion table to reference to when performing a conversion, and obtains an EINFO from the header analyzing unit 102. Then, after converting the EINFO into the EINFO' in accordance with the conversion table, the header converting unit 104 outputs the EINFO' to the header analyzing unit 102.

The data encrypting unit 106 is a processing unit for performing data encryption, and obtains a data section ("mdat") of the file from the file reading unit 101. The data encrypting unit 106 encrypts the data using the data access information held by the data structure holding unit 103, and outputs the data section obtained after encryption (i.e., an encrypted mdat) to the file outputting unit 105.

The file outputting unit 105 is a processing unit for obtaining the "moov'" from the header analyzing unit 102 as well as obtaining the encrypted mdat from the data encrypting unit 106. After integrating these, the file outputting unit 105 outputs the encrypted file.

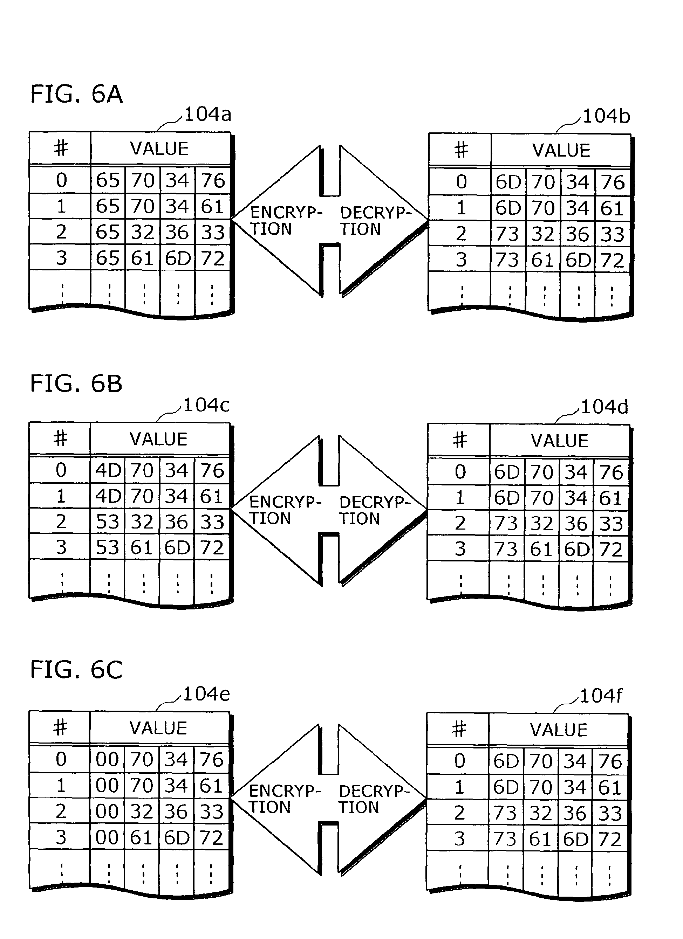

Here, an explanation is given as to the conversion table provided for the header converting unit 104, with reference to a plurality of examples shown in FIG. 6.

FIG. 6A is a first example of the conversion table.

In FIG. 6A, a conversion table A 104a is shown on the left side while a conversion table B 104b is shown on the right side. Here, the conversion table A 104a and the conversion table B 104b are associated with each other by the numbers shown in #. If a value Ox6D703476 ("mp4v") is described in the entry type included in an EINFO of an unencrypted file, this means that this value is to be converted into a value 0x65703476 ("ep4v"). To be more specific, FIG. 6A shows a structure where every first character of the entry type included in an EINFO of an unencrypted file is converted into 0x65 ("e").

It should be noted that, as another structure shown in FIG. 6B, a lowercase alphabetic character m of the first character of the entry type may be converted into an uppercase alphabetic character M. With this structure, values of the entry type such as mp4v, mp4a, s263, and samr before encryption would be respectively converted into Mp4v, Mp4a, S263, and Samr through encryption. Moreover, as shown in FIG. 6C, every first character of the entry type may be converted into 0x00. This is to say, as long as the conversion is performed by the encryption side and the decryption side according to a uniquely defined rule, any conversion rule can be employed. For example, instead of a first character, an arbitrary character may be converted, or two or more characters may be converted. Alternatively, a conversion rule by which the sequence of characters is changed may be employed.

Next, an explanation is given as to an example of a specific operation performed by the header converting unit 104. Note that, in the present example, the header converting unit 104 uses the conversion table shown in FIG. 6A and mp4v is described in the entry type.

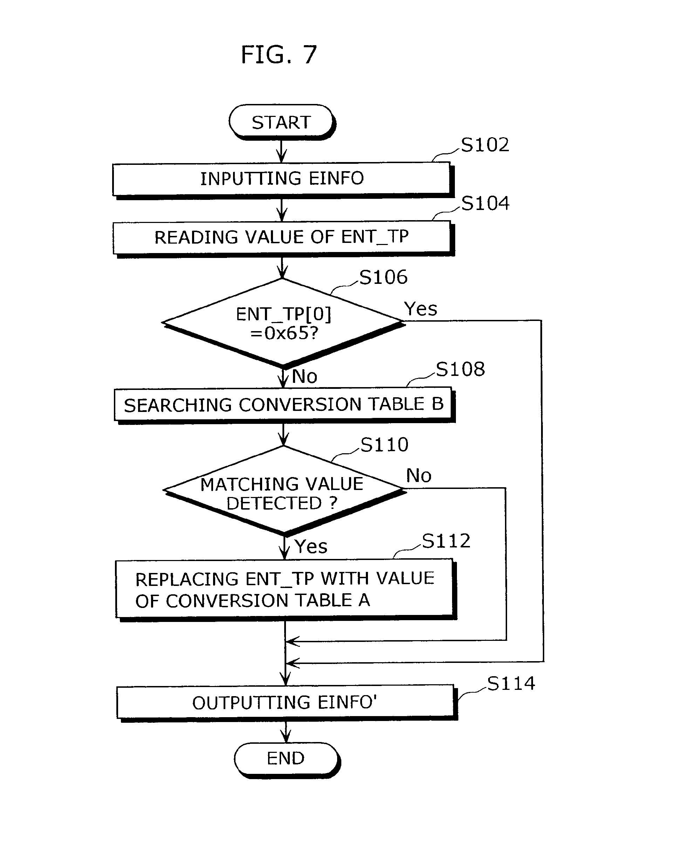

FIG. 7 is a flowchart showing a first example of a processing operation performed by the header converting unit 104.

First, the header converting unit 104 inputs an EINFO outputted from the header analyzing unit 102 (S102).

Next, the header converting unit 104 reads out an entry type (ENT_TP) included in the EINFO (S104), and judges whether the first byte ENT_TP [0] of the ENT_TP is 0x65 (which represents e based on the ASCII) (S106).

If it is judged to be 0x65 (Yes at S106), this means that image data related to this track has been already encrypted and the value of the EINFO does not need to be changed. Thus, processing from step S108 to step S112 can be omitted. It should be noted that whether or not the first byte of the ENT_TP is 0x65 is what determines the presence or absence of encryption in the present embodiment.

Meanwhile, if it is judged not to be 0x65 (No at S106), the header converting unit 104 searches for the value described in the ENT_TP through the conversion table B 104b (S108). As shown in FIG. 6A, the conversion table B 104b has at least four candidates, from 0 to 3. By the ASCII representation: the entry of #0 is mp4v; the entry of #1 is mp4a; the entry of #2 is s263; and the entry of #3 is samr. These are specified values indicating the encoding methods defined by the standard of the ISO/MPEG and 3GPP.

On the basis of the search result obtained in step S108, the header converting unit 104 judges whether a matching value has been detected (S110). Here, since the value of the ENT_TP is mp4v, the header converting unit 104 judges that the value matches with the entry of #0 in the conversion table B 104b (Yes at S110). Note that if no matching value has been detected (No at S110), the header converting unit 104 holds the value described in the ENT_TP as it is and proceeds to step S114.

After this, the header converting unit 104 replaces the value of the ENT_TP with the value 0x65703476 ("ep4v") of the same #0 in the conversion table A 104a (S112).

Finally, the header converting unit 104 outputs the EINFO' in which the value of the ENT_TP has been converted as described so far to the header analyzing unit 102 and then ends the processing operation (S114).

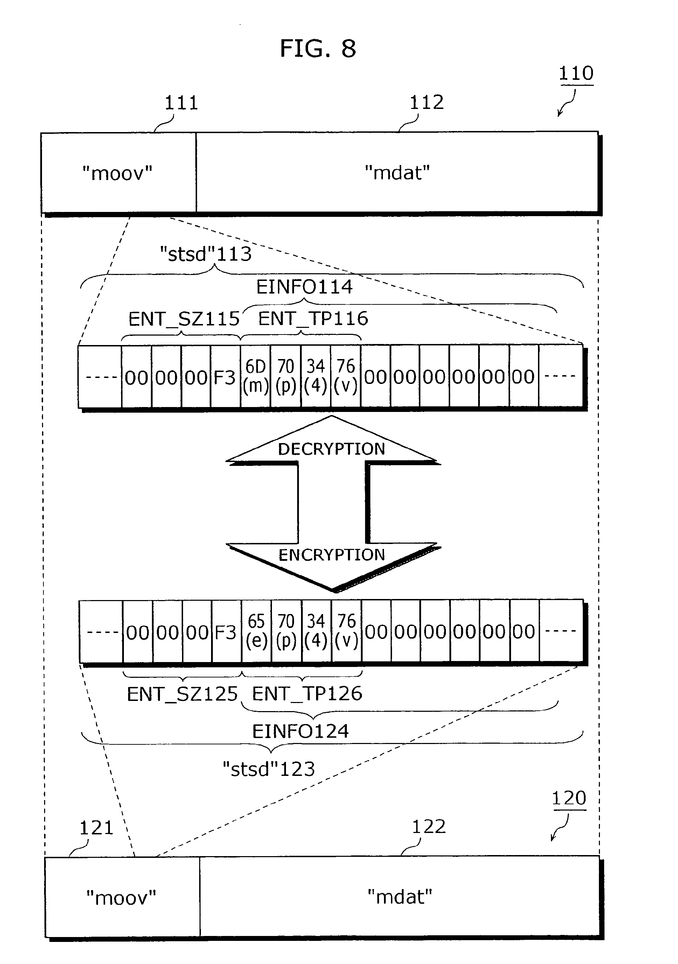

FIG. 8 is a diagram showing a comparison of a file before encryption to a file after encryption which is performed by the encrypting apparatus 100.

FIG. 8 shows a sample description information storage box ("stsd") 113 included in a "moov" 111 of a file 110 before encryption (i.e., an unencrypted file) and an "stsd" 123 included in a "moov" 121 of a file 120 after encryption (i.e., an encrypted file). This diagram also shows that a value (6D) of a first byte of an unencrypted ENT_TP 116 is converted into a value (e) of a first byte of an encrypted ENT_TP 126.

In this way, by converting the value of the unencrypted ENT_TP 116 which is a field for describing an encoding method when data is to be encrypted, the ENT_TP 126 of the encrypted file 120 can be used as a field for indicating the encoding method and the presence or absence of encryption.

Moreover, as shown in the present diagram, a value of an entry size (ENT_SZ) 115 is not changed between the unencrypted file 110 and the encrypted file 120. This means that the size is not changed between the "moov" 111 and the "moov" 121 even after the encryption processing. That is to say, the file sizes of the file 110 and the file 120 are the same.

Note that the explanation described so far has been given on the assumption that the encrypting method to be used for encrypting data is fixed. However, even in a case where the encrypting method is variable, the encrypting apparatus 100 can set the encrypting method and its version number using the header converting unit 104. In this case, the encrypting method and its version number can be described using the reservation field (RSV_6) of the above-stated file format.

A more specific explanation is given. The reservation field has six bytes with values of 0. As such, after replacing the ENT_TP with the value found in the conversion table A 104a at the step S112 of the flowchart shown in FIG. 7, the header converting unit 104 uses four bytes to set a scheme type field (SC_TYPE) indicating an encrypting method and uses two bytes to set a scheme version field (SC_VER) indicating a version number of the encrypting method, for example. Then, the header converting unit 104 describes the values of a pre-given encrypting method and its version number into the fields, and outputs the EINFO' to the header analyzing unit 102.

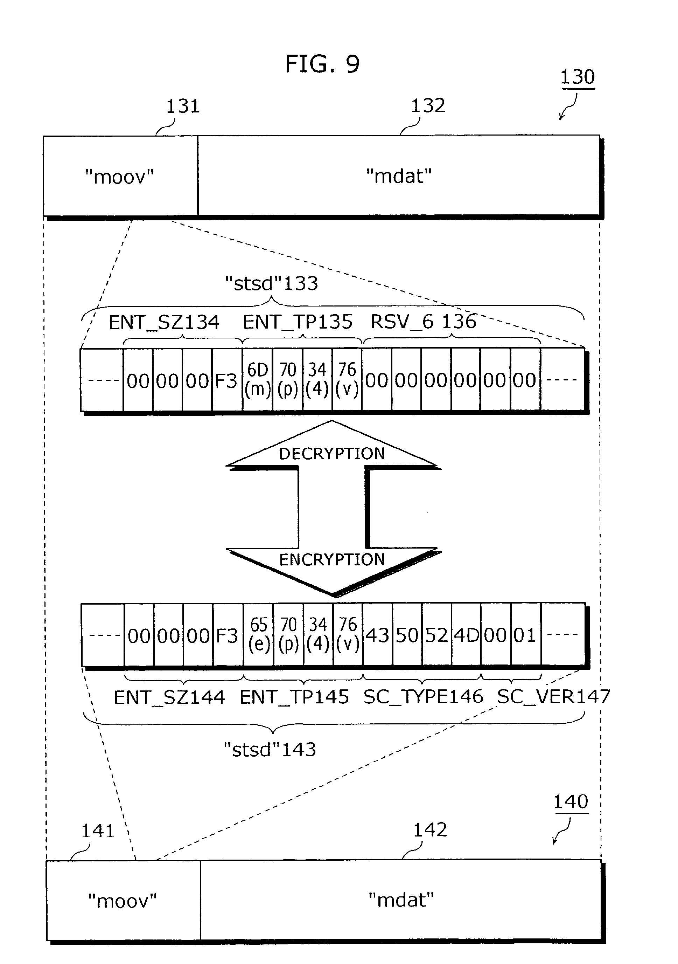

FIG. 9 is a diagram showing a comparison of a file before encryption to a file after a second encryption processing which is performed by the encrypting apparatus 100.

FIG. 9 shows that a reservation field 136 included in an "stsd" 133 of an unencrypted file 130 is converted into a scheme type field (SC_TYPE) 146 and a scheme version field (SC_VER) 147 of an "stsd" 143 in an encrypted file 140.

As is the case with FIG. 8, a value of an ENT_SZ 134 is not changed between the unencrypted file 130 and the encrypted file 140.

In this way, the encrypting apparatus 100 can generate the encrypted file showing the information such as the encrypting method and its version number without changing the file size by using the reservation field.

Incidentally, the reservation field is provided as an extended area for the future and its available byte size is limited to six bytes. As such, the encrypting apparatus 100 may use another method to convert the EINFO so that the encrypting method, the presence or absence of encryption, the encrypting method, its version number, etc. will be indicated. In the present embodiment, bit inversion is explained as another method.

For using the bit inversion, the header converting unit 104 holds a bit inversion table in which a plurality of bit inversion formulas are recorded. The header converting unit 104 selects a bit inversion formula predetermined corresponding to an encoding method or encrypting method, and then converts a value of an ENT_TP of an EINFO according to the selected formula.

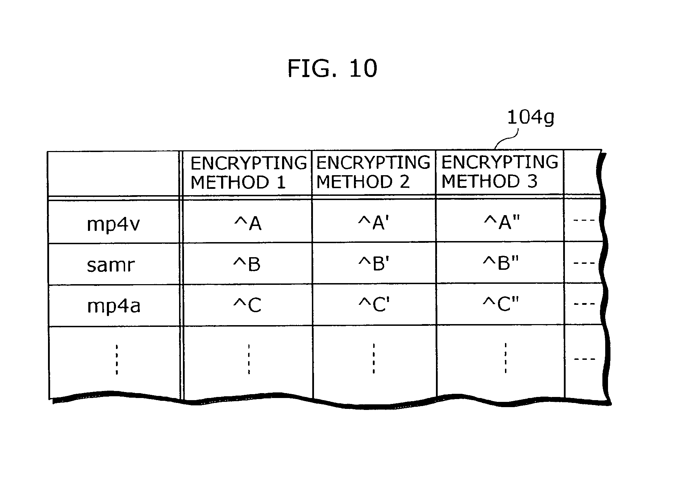

FIG. 10 shows an example of a bit inversion table.

As shown in FIG. 10, a bit inversion table 104g records a different bit inversion formula for each encoding method and encrypting method in table form. This diagram shows that if the encoding method described in the ENT_TP is mp4v and data is to be encrypted using an encrypting method 1, the bit inversion is performed on mp4v using a bit inversion formula ^A to covert the value of the ENT_TP.

It should be noted that the present diagram does not show the version numbers of the encrypting methods. In a case where the version number of the encrypting method is to be considered, the encrypting method 1 can be provided for each version number and a different bit formula can be assigned for each, for example.

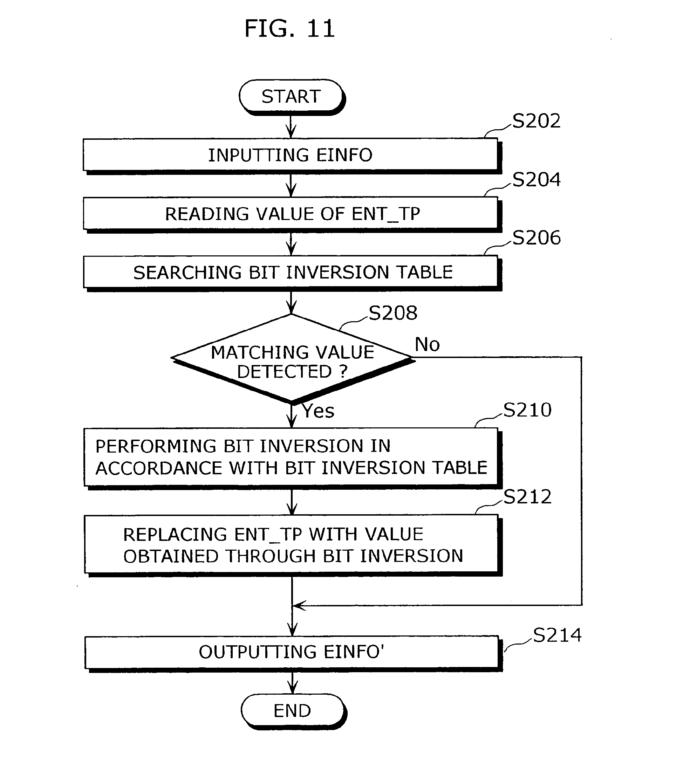

FIG. 11 is a flowchart showing a second example of the processing operation performed by the header converting unit 104 of the encrypting apparatus 100. Note that mp4v is described in the ENT_TP and data is to be encrypted according to the encrypting method 1 in the present example as is the case with the above example.

First, the header converting unit 104 inputs an EINFO outputted from the header analyzing unit 102 (S202).

Next, the header converting unit 104 reads out an ENT_TP included in the EINFO (S204).

Following this, the header converting unit 104 searches for the value described in the ENT_TP indicating the encoding method through the bit inversion table 104g (S206) and then judges whether a matching value has been detected (S208). Here, since the value of the ENT_TP is mp4v, the header converting unit 104 judges that the matching value is in the bit inversion table 104g (Yes at S208). Note that if judging that no matching value is in the table (No at S208), the header converting unit 104 holds the value described in the ENT_TP as it is and proceeds to step S214.

Then, the header converting unit 104 performs the bit inversion on the value of the ENT_TP according to the bit inversion formula set in the bit inversion table 104g (S210). In the present example, since the data is supposed to be encrypted according to the encrypting method 1, the header converting unit 104 performs the bit inversion on the value of the ENT_TP using the bit inversion formula ^A shown in the bit inversion table 104g.

After this, the header converting unit 104 replaces the value of the ENT_TP with the value obtained through the bit inversion (S212). Finally, the header converting unit 104 outputs the EINFO' in which the value of the ENT_TP has been converted to the header analyzing unit 102 and then ends the processing operation (S214).

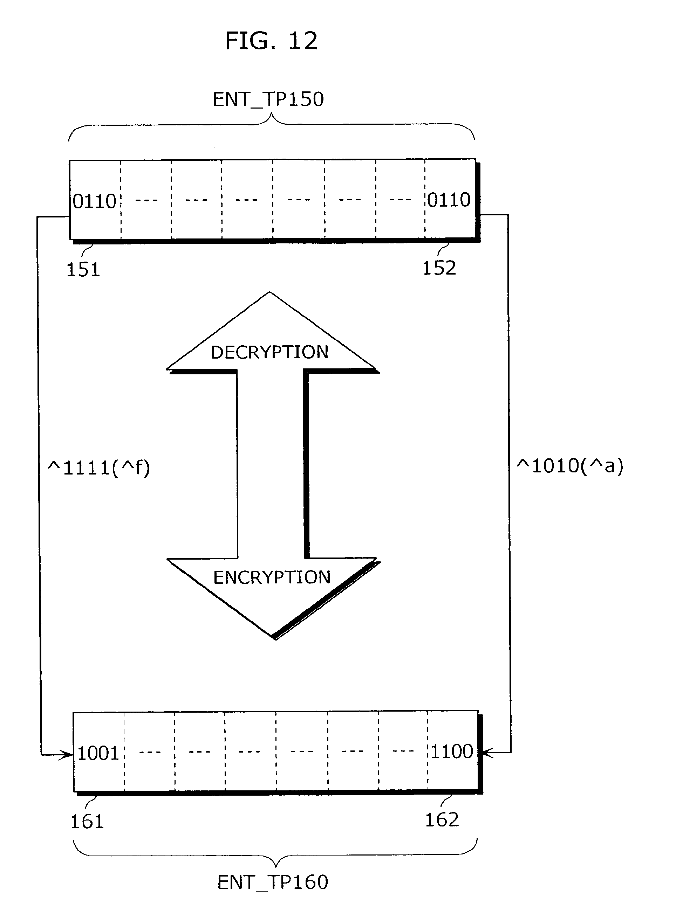

FIG. 12 is a diagram showing a comparison of an entry type before bit inversion to an entry type after bit inversion.

FIG. 12 shows that a value 0110 is described in a first four-bit 151 of an unencrypted ENT_TP 150 and that a value 0110 is described in a last four-bit 152 as well. This is because mp4v would be 0x6D703476 as a hexadecimal number by the ASCII representation and the value 6 which is a value of each of the first four bits and the last four bits is represented as 0110 by binary numbers.

Moreover, the present diagram shows that the bit inversion is performed on the first four-bit 151 according to ^1111 (^f) and a value 1001 is described into a first four-bit 161 of an encrypted ENT_TP 160. The present diagram also shows that the bit inversion is performed on the last four-bit 152 according to ^1010 (^a) and a value 1100 is described into a last four-bit 162 of the encrypted ENT_TP 160.

Here, the first four-bit 151 and the last four-bit 152 are set so that the bit inversion formulas are changeable respectively according to the encrypting method and the version number of the encrypting method. By doing so, the 151 can indicate that the encrypting method is variable while the 152 can indicate the version number of the encrypting method.

In order to achieve this, a bit position of the ENT_TP at which the bit inversion is performed is set for each encrypting method and each version number, and a plurality of bit inversion formulas are provided as well. With this, as compared with the stated case where the reservation field is used, more detailed encryption information can be provided without changing the file size between before and after encryption.

In this way, the encrypting apparatus of the first embodiment can specify the encoding method employed before encryption, the presence or absence of encryption, the encrypting method, the version number of the encrypting method, etc. in the header of the file without changing the file size, by replacing the value of the field included in the header of the file to indicate the encoding method or by performing the bit inversion on the value.

It has been impossible for the conventional MP4 file format of the ISO/MPEG to specify both the presence/absence of encryption and the encoding method in one data field. However, it becomes possible using the encrypting apparatus of the first embodiment.

Moreover, since the storage positions of data, such as image, audio, and text data, measured from the beginning of the file are not changed, the access information of each set of data does not need to be updated. As to the header of the file, only four-byte part (ENT_TP) of the EINFO has to be rewritten. Thus, as compared to an encrypting apparatus that operates according to the conventional file format standard, the processing load of the header can be substantially reduced.

Furthermore, since the file size is not changed, a recording position of data does not need to be changed even in a case where a file on an optical disk is to be encrypted like when using a DVD recorder or the like. Thus, various effects can be expected. For example, it would be unnecessary to update the management information holding the file size information that is possibly required depending on the standard of the memory card.

### (Second Embodiment)

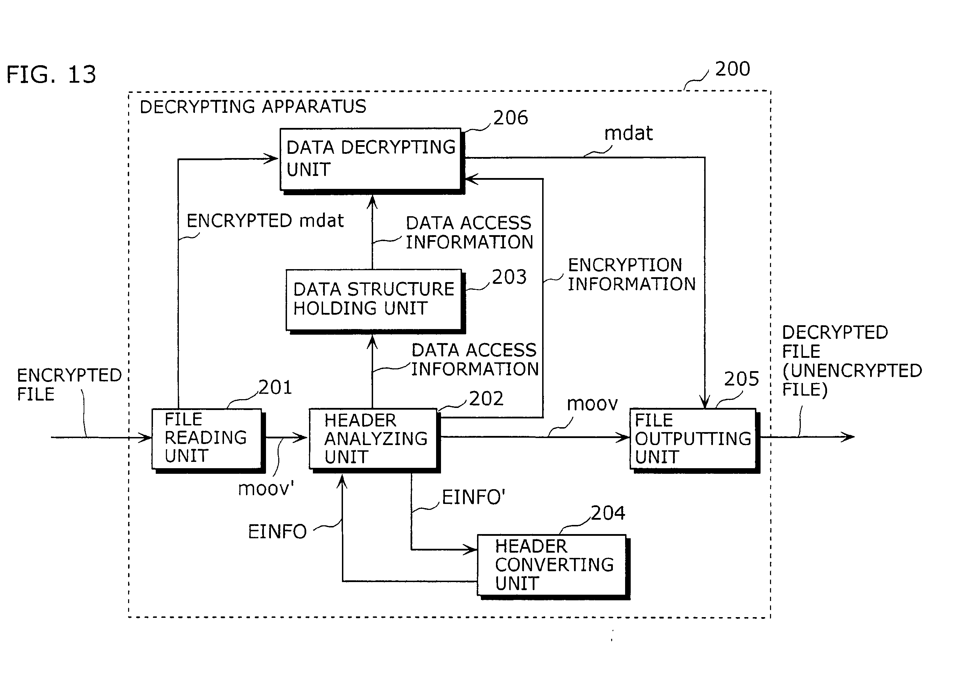

Next, a decrypting apparatus of the second embodiment of the present invention is explained, with reference to FIG. 13 to FIG. 15.

The decrypting apparatus of the second embodiment inputs an encrypted file based on the file format explained in the above first embodiment and outputs a decrypted file. The decrypting apparatus has many parts in common with the encrypting apparatus described in the above first embodiment. Therefore, an explanation will be given mainly regarding the different parts.

FIG. 13 is a block diagram showing a functional structure of the decrypting apparatus of the second embodiment.

As shown in FIG. 13, a decrypting apparatus 200 is composed of a file reading unit 201, a header analyzing unit 202, a data structure holding unit 203, a header converting unit 204, a file outputting unit 205, and a data decrypting unit 206.

The file reading unit 201 is a processing unit for inputting a file (an encrypted file) generated by the encrypting apparatus 100 of the above first embodiment. Following an instruction from the header analyzing unit 202, the file reading unit 201 reads an encrypted file and outputs a header section ("moov"') of the file to the header analyzing unit 202.

The header analyzing unit 202 is a processing unit for analyzing the "moov"', and outputs an EINFO' of each entry included in the "moov"' to the header converting unit 204 as well as outputting access information of data, such as image, audio, and text data, stored in the encrypted file to the data structure holding unit 203. Moreover, the header analyzing unit 202 obtains an EINFO, which can be obtained by converting the EINFO', from the header converting unit 204. Then, the header analyzing unit 202 generates a "moov" that includes the EINFO and outputs it to the file outputting unit 205. Furthermore, from the header converting unti 204, the header analyzing unit 202 obtains encryption information, including the presence or absence of encryption, an encrypting method, the version number of the encrypting method, etc., that is required to decrypt the encrypted data. The header analyzing unit 202 then outputs the information to the data decrypting unit 206.

The data structure holding unit 203 is a memory, such as a DRAM or an SDRAM, for holding the data access information.

The header converting unit 204 is a processing unit for determining the presence or absence of encryption and the encoding method and for converting an EINFO' into an EINFO. The header converting unit 204 is provided with a conversion table to reference to when performing a conversion. After obtaining the EINFO' from the header analyzing unit 202 and converting it into the EINFO in accordance with the conversion table, the header converting unit 204 outputs the EINFO to the header analyzing unit 202.

The data decrypting unit 206 is a processing unit for unscrambling encryption of data (i.e., performing decryption). The data decrypting unit 206 obtains an encrypted mdat from the file reading unit 201 and decrypts the data using the encryption information outputted from the header analyzing unit 202 and the data access information held by the data structure holding unit 203. Then, the data decrypting unit 206 outputs the data section (mdat) obtained through the decryption to the file outputting unit 205.

The file outputting unit 205 is a processing unit for obtaining the "moov" from the header analyzing unit 202 as well as obtaining the mdat from the data decrypting unit 206. After integrating these, the file outputting unit 205 outputs the decrypted file, that is, the unencrypted file.

Next, an explanation is given as to an example of a specific operation performed by the header converting unit 204. Note that, as in the case with the above first embodiment, the conversion table shown in FIG. 6A is used and ep4v is described in the entry type in the present example.

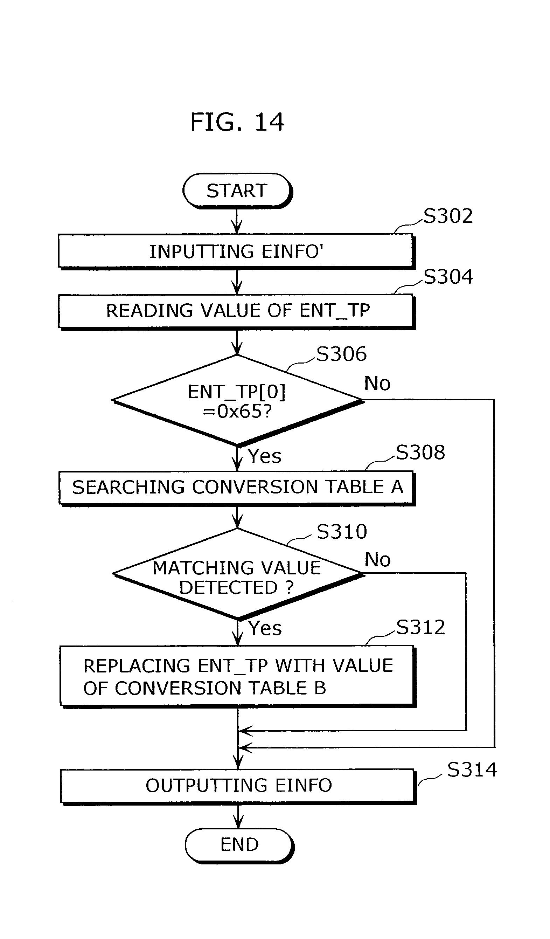

FIG. 14 is a flowchart showing a first example of a processing operation performed by the header converting unit 204.

First, the header converting unit 204 obtains an EINFO' outputted from the header analyzing unit 202 (S302).

Next, the header converting unit 204 reads out an ENT_TP included in the EINFO' (S304), and judges whether the first byte ENT_TP [0] of the ENT_TP is 0x65 (S306).

If it is judged not to be 0x65 (No at S306), this means that image data related to this track has been already decrypted or the image data is unencrypted. As such, the value of EINFO' does not need to be changed and processing from step S308 to step S312 can be omitted. It should be noted that whether or not the first byte of the ENT_TP is 0x65 is what determines the presence or absence of encryption in the second embodiment.

Meanwhile, if it is judged to be 0x65 (Yes at S306), the header converting unit 204 searches for the value described in the ENT_TP through the conversion table A 104a (S308). As shown in FIG. 6A, the conversion table A 104a has at least four candidates, from 0 to 3. By the ASCII representation: the entry of #0 is ep4v; the entry of #1 is ep4a; the entry of #2 is e263; and the entry of #3 is eamr. These are obtained by converting a first byte of a specified value indicating the encoding method defined by the standard of the ISO/MPEG and 3GPP into 0x65 (representing e in the ASCII representation).

On the basis of the search result obtained in step S308, the header converting unit 204 judges whether a matching value has been detected (S310). Here, since the value of the ENT_TP is ep4v, the header converting unit 204 judges that the value matches with the entry of #0 in the conversion table A 104a (Yes at S310). Note that if no matching value has been detected (No at S310), the header converting unit 204 holds the value described in the ENT_TP as it is and proceeds to step S314.

After this, the header converting unit 204 replaces the value of the ENT_TP with the value 0x6D703476 ("mp4v") of the same #0 in the conversion table B 104b (S312).

Finally, the header converting unit 204 outputs the EINFO in which the value of the ENT_TP has been converted as described so far to the header analyzing unit 202 and then ends the processing operation (S314).

It should be noted that in a case where the encrypting method and its version number are described using the reservation field as explained in the above-stated embodiment, the header converting unit 204 replaces the ENT_TP with the value found in the conversion table B 104b, sets the values of the SC_TYPE and SC_VER fields to 0, and outputs the EINFO to the header analyzing unit 202. This is because the SC_TYPE and SC_VER are not to be set in an unencrypted file.

In addiction, in a case of converting the EINFO using the bit inversion so as to indicate the encoding method, the presence/absence of encryption, the encrypting method, and its version number as explained in the above-stated embodiment, the header converting unit 204 operates as follows.

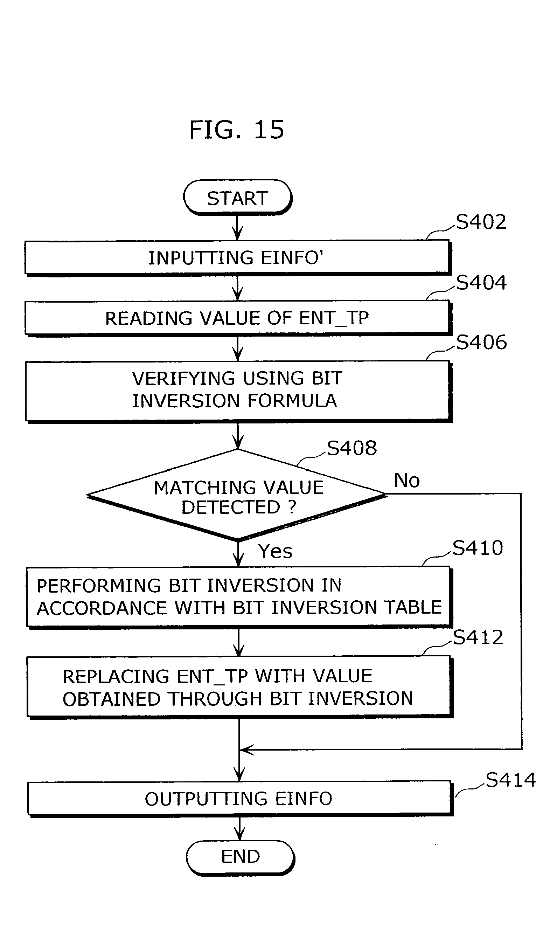

FIG. 15 is a flowchart showing a second example of the processing operation performed by the header converting unit 204. Note that, as in the case with the stated example, ep4v is described in the ENT_TP and the data encryption is performed according to the encrypting method 1 in the present example.

First, the header converting unit 204 inputs an EINFO' outputted from the header analyzing unit 202 (S402).

Next, the header converting unit 204 reads out an ENT_TP included in the EINFO' (S404).

Following this, the header converting unit 204 applies the value described in the ENT_TP indicating the encoding method or encrypting method to each bit inversion formula recorded in the bit inversion table 104g and verifies whether the value after the bit re-inversion becomes the value indicating the encoding method (S406). Then, the header converting unit 204 judges whether the values calculated through the bit re-inversion using every bit inversion formula match with the value indicating the encoding method (S408). Here, since the value of the ENT_TP is ep4v and the data encryption is to be performed according to the encrypting method 1, the header converting unit 204 judges that the value obtained through the bit re-inversion according to the bit inversion formula ^A in the bit inversion table 104g matches with mp4v (Yes at S408). If judging there is no matching value (No at S408), the header converting unit 204 holds the value described in the ENT_TP as it is and proceeds to step S414.

Then, the header converting unit 204 performs the bit re-inversion on the value of the ENT_TP according to the bit inversion formula set in the bit inversion table 104g (S410). In the present example, the header converting unit 204 performs the bit re-inversion on the value of the ENT_TP using the bit inversion formula ^A in the bit inversion table 104g.

After this, the header converting unit 204 replaces the value of the ENT_TP with the value after the bit inversion (mp4v here). Finally, the header converting unit 204 outputs the EINFO in which the value of the ENT_TP has been converted to the header analyzing unit 202 and then ends the processing operation (S414).

Note that the header converting unit 204 may perform the verification and judgment as follows at the steps S406 and S408 shown in FIG. 15. In this case, the unencrypted ENT_TP is described as a value within a range that is capable of the ASCII representation, and the encrypting method ^A is employed from among the three types defined as the bit inversion formulas: ^A (=ff000000); ^A' (=ffff0000); and ^A" (=ffff00ff).

If mp4v (0x6D703476) is described in the unencrypted ENT_TP, ?p4v (0x92703476) will be described in the encrypted ENT_TP as a result of the inversion of mp4v according to the bit inversion formula ^A (=ff000000). Here, note that "?" is a code which cannot be represented by the ASCII representation.

The header converting unit 204 reads out the ENT_TP included in the EINFO' and verifies by applying "?p4v" (0x92703476) to each of the three types of bit inversion formulas. As a result, the value mp4v (0x6D703476) is obtained according to ^A (=ff000000), m?4v (0x6D8F3476) is obtained according to ^A' (=ffff0000), and m?4? (0x6D8F3489) is obtained according to ^A" (=ffff00ff).

On the understanding that the unencrypted ENT_TP is described as the value within the range that is capable of the ASCII representation, the header converting unit 204 judges in step S408 that the encryption has been performed according to the encrypting method ^A. This is because codes not describable by the ASCII representation remain as the verification results through ^A' and ^A" and only the verification result obtained through ^A can be described by the ASCII representation.

In this way, using the decrypting apparatus of the second embodiment, the file size can remain the same before and after decryption and the processing load of the header can be reduced as compared with the case using the conventional decrypting apparatus as with the above-stated first embodiment. Thus, even in a case where a file on an optical disk is to be decrypted, a recording position of data does not need to be changed and other effects can be expected.

### (Third Embodiment)

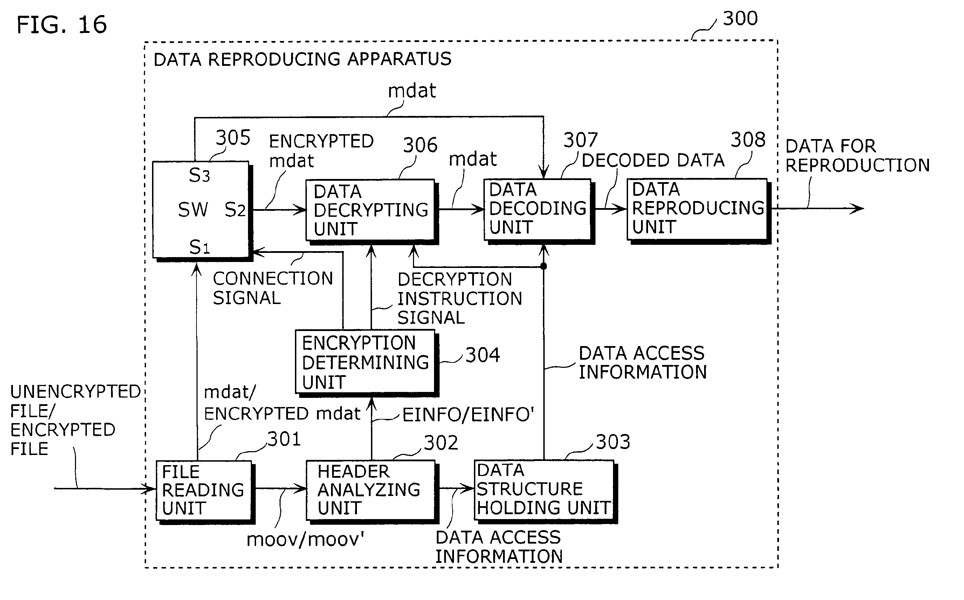

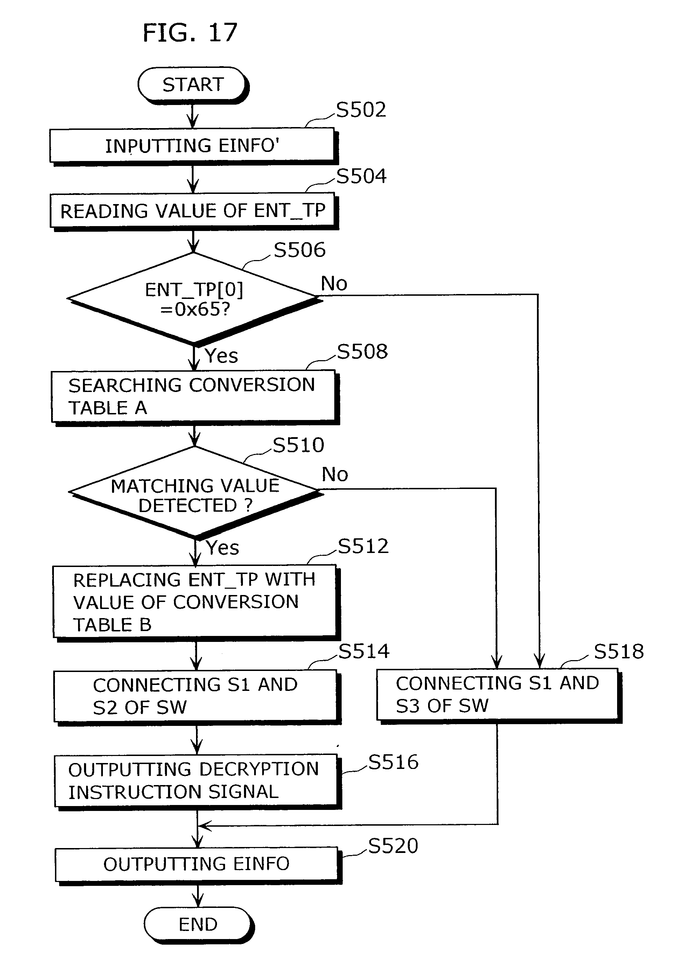

Next, a data reproducing apparatus of the third embodiment of the present invention is explained, with reference to FIG. 16 and FIG. 17.

This data reproducing apparatus inputs a file based on the file format explained in the stated first and second embodiments. If it is encrypted, the data reproducing apparatus decodes the encrypted data and outputs the data for reproduction.

FIG. 16 is a block diagram showing a functional structure of the data reproducing apparatus of the third embodiment.

As shown in FIG. 16, a data reproducing apparatus 300 is composed of a file reading unit 301, a header analyzing unit 302, a data structure holding unit 303, an encryption determining unit 304, an SW (switch) 305, a data decrypting unit 306, a data decoding unit 307, and a data reproducing unit 308. It should be noted that the block diagram of the data reproducing apparatus 300 shown in the present figure is structured by adding the SW 305, the data decoding unit 307, and the data reproducing unit 308 to the function block diagram of the decrypting apparatus 200 of the second embodiment shown in FIG. 13 and by replacing the header converting unit 204 with the encryption determining unit 304. The basic processing operation performed until the completion of decryption is similar to the processing operation performed by the decrypting apparatus 200 of the above second embodiment.

Moreover, regardless of whether a file is encrypted or not, this data reproducing apparatus 300 can decode and reproduce the inputted file. A more specific explanation is given. If the encryption determining unit 304 detects encryption, an S1 and an S2 of the SW 305 are connected. Then, after the data decrypting unit 306 performs decryption, "mdat" is outputted to the data decoding unit 307. Meanwhile, if the encryption determining unit 304 does not detect encryption, the S1 and an S3 of the SW 305 are connected. This time, "mdat" is outputted directly to the data decoding unit 307 without using the data decrypting unit 306.

The encryption determining unit 304 is a processing unit for determining the presence or absence of encryption, the encoding method, etc. By obtaining an EINFO or EINFO' from the header analyzing unit 302, the encryption determining unit 304 judges whether the inputted file is an encrypted file or unencrypted file. If judging it is an encrypted file, the encryption determining unit 304 outputs a connection signal to the SW 305 so that the S1 and the S2 are connected, and also outputs a decryption instruction signal to direct the data decrypting unit 306 to perform decryption. Meanwhile, if judging it is an unencrypted file, the encryption determining unit 304 outputs a connection signal to the SW so that the S1 and S3 are connected. Note that when outputting the decryption instruction signal, the encryption determining unit 304 outputs the encryption information including the encrypting method to the data decrypting unit 306 as well.

The SW 305 is a switch for operating according to the connection signal sent from the encryption determining unit 304.

The data decoding unit 307 is a processing unit for decoding encoded data. The data decoding unit 307 obtains a decrypted mdat, decodes the mdat encoded according to a predetermined encoding method, and then outputs the decoded data to the data reproducing unit 308.

The data reproducing unit 308 is a processing unit for reproducing the decoded data and outputting it to a displaying device.

A specific operation performed by the encryption determining unit 304 is shown as a flowchart in FIG. 17. This flowchart is the same as the flowchart in FIG. 14 showing the operation performed by the header converting unit 204 of the decrypting apparatus 200, except that steps S514 and S518 are added in FIG. 17. In step S514, if the data is encrypted, the encryption determining unit 304 outputs the connection signal so that the S1 and the S2 of the SW 305 are connected. In step S518, if the data is unencrypted, the encryption determining unit 304 outputs the connection signal so that the S1 and the S3 of the SW 305 are connected.

Although not shown in the flowchart of FIG. 17, the encryption determining unit 304 may determine the SC_TYPE indicating the encrypting method and the SC_VER indicating the version number of the encrypting method which make up the data field adjacent to the ENT_TP and may judge whether these correspond to the specified encrypting method.

Moreover, the encryption determining unit 304 may perform a processing operation in which the steps S514 and S518 of the flowchart shown in FIG. 17 are added to the flowchart in FIG. 15 showing the operation performed by the header converting unit 204 of the decrypting apparatus 200. In doing so, the encryption determining unit 304 may decrypt an encrypted file showing the encoding method, the presence/absence of encryption, the encrypting method, the version number of the encrypting method, etc. through the bit inversion and may decode it for reproduction.

### (Application Example)

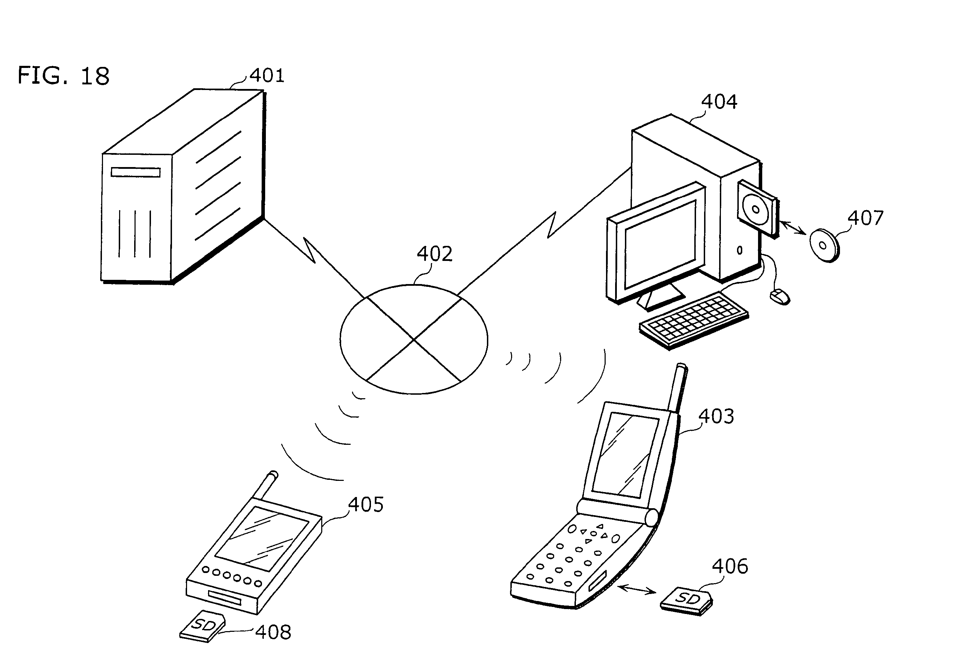

The following is an explanation of an application example of the encrypting apparatus, the decrypting apparatus, and the data reproducing apparatus of the present invention, with reference to FIG. 18.

FIG. 18 shows an application example of the encrypting apparatus, the decrypting apparatus, and the data reproducing apparatus of the present invention.

The encrypting apparatus, the decrypting apparatus, and the data reproducing apparatus of the present invention can be applied to a mobile phone 403, a personal computer 404, and a PDA 405 which receive an MP4 file or the like distributed from a contents server 401 that provides contents such as moving picture data, via a communication network 402 such as the Internet. The mobile phone 403, the personal computer 404, and the PDA 405 encrypt the received MP4 file, record it to a recording medium such as a memory card 406 and a DVD-RAM 407, read the encrypted MP4 file from a recording medium such as a memory card 408, and reproduce it.

In this way, the encrypting apparatus, the decrypting apparatus, and the data reproducing apparatus of the present invention can be respectively used as an MP4 file recording apparatus which encrypts and records an MP4 file and as an MP4 file reproducing apparatus which decrypts and reproduces an MP4 file, in an image distribution system.

Accordingly, an explanation has been given as to the encrypting apparatus, the decrypting apparatus, and the data reproducing apparatus of the present invention on the basis of the embodiments. However, the present invention is not limited to these embodiments.

For example, in the stated embodiments, the explanation has been given, with attention focused on a track including one set of data. However, a plurality of tracks (each including image, audio, and text data) may be multiplexed to a file. In this case, the header converting units 104 and 204, the encrypting unit 106, and the decrypting units 206 and 306 can individually operate with respect to each track.

Moreover, in the stated embodiments, the explanation has been given using a file in which a header section and a data section are integrated. However, the header section and the data section may be separated and may make up respective files.

Furthermore, in the stated embodiments, the explanation has been given as to a case of a hardware structure as an example. However, a part of or entire processing may be operated as a software program which operates on a platform such as a CPU or DSP. The software program can be recorded to a floppy disk, a CD-ROM, or a memory card so as to be carried around and can be activated on various apparatuses so as to operate based on the embodiments.

Moreover, in the stated first embodiment, the first byte of the ENT_TP is what determines the presence or absence of encryption. This is merely one example, and various methods can be considered. However, the method needs to be defined in advance by the standard of the encryption file format. For example, a byte other than the first byte may be converted, or two or more bytes may be converted. As long as a conversion rule which is appropriately considered is standardized, the presence or absence of encryption can be determined while the information regarding the encoding method is held in the ENT_TP. In this way, according to the predetermined rule, it becomes possible to correspond to a new type of data, as compared with the conventional file format. The conventional file format can correspond only to three types of data, that is, image, audio, and system data defined by the MPEG4 system. However, the method, by which the ENT_TP indicating the encoding method is converted according to the predetermined rule, can easily correspond to a text encoding method defined by the 3GPP (for example, tx3g would be encrypted to ex3g).

Furthermore, although an inputted file is described so as to be based on the ISO/MPEG4 file format (that is, an MP4 file) in the stated embodiments, it can be applied to other file formats.

### Industrial Applicability

The encrypting apparatus, the decrypting apparatus, and the data reproducing apparatus of the present invention are suitable as a mobile phone, a personal computer, and the like provided with a moving picture reproducing function that: obtain an MP4 file storing media data, such as video data and audio data; encrypt and record the MP4 file to a recording medium; and decrypt and reproduce the MP4 file storing the encrypted media data, such as video data and audio data.

## Claims

1. An encrypting apparatus for encrypting at least one of encoded image data, audio data, and text data, said encrypting apparatus comprising:
a file reading unit operable to obtain a file which has a data section including the encoded image data, audio data, and text data and a header section including a header of the data section;
an encrypting unit operable to encrypt at least one of the encoded image data, audio data, and text data included in the data section of the file;
a header analyzing unit operable to analyze the header section of the file and to obtain a value described in a field that is included in the header section to show an encoding method used for data to be encrypted by said encrypting unit;
a header converting unit operable to convert the obtained value according to a predetermined conversion rule and to replace the value described in the field with the converted value; and
a file outputting unit operable to output a file having a header section including a field in which the value has been replaced and a data section including the encrypted data.

2. The encrypting apparatus according to Claim 1,
wherein said header converting unit is operable to convert the obtained value through a bit inversion.

3. The encrypting apparatus according to Claim 2,
wherein said header converting unit is operable to change a bit position in the obtained value at which the bit inversion is to be performed, according to an encrypting method used by said encrypting unit.

4. The encrypting apparatus according to Claim 2,
wherein said header converting unit is operable to change a bit inversion formula to be used for the bit inversion, according to an encrypting method used by said encrypting unit.

5. The encrypting apparatus according to Claim 1,
wherein the conversion rule is represented by a conversion table in which the obtained value is recorded in association with the converted value.

6. A decrypting apparatus for decrypting encrypted data, the encrypted data being at least one of encoded image data, audio data, and text data, said decrypting apparatus comprising:
a file reading unit operable to obtain a file which has a data section including the encoded image data, audio data, and text data and a header section including a header of the data section;
a header analyzing unit operable to analyze the header section of the file and to obtain a value described in a field that is included in the header section to show an encoding method used for the encrypted data and information regarding encryption;
a header converting unit operable to convert the obtained value according to a predetermined conversion rule and to replace the value described in the field with the converted value;
a decrypting unit operable to decrypt the encrypted data out of the encoded image data, audio data, and the text data included in the data section of the file; and
a file outputting unit operable to output a file having a header section including a field in which the value has been replaced and a data section including the decrypted data.

7. The decrypting apparatus according to Claim 6,
wherein said header converting unit is operable to convert the obtained value through a bit inversion.

8. The decrypting apparatus according to Claim 7,
wherein said header converting unit is operable to change a bit position in the obtained value at which the bit inversion is to be performed, according to the information regarding the encryption.

9. The decrypting apparatus according to Claim 7,
wherein said header converting unit is operable to change a bit inversion formula to be used for the bit inversion, according to the information regarding the encryption.

10. The decrypting apparatus according to Claim 6,
wherein the conversion rule is represented by a conversion table in which the obtained value is recorded in association with the converted value.

11. A data reproducing apparatus for decrypting and decoding encrypted data for reproduction, the encrypted data being at least one of encoded image data, audio data, and text data, said data reproducing apparatus comprising:
a file reading unit operable to obtain a file which has a data section including the encoded image data, audio data, and text data and a header section including a header of the data section;
a header analyzing unit operable to analyze the header section of the file and to obtain a value described in a field that is included in the header section to show an encoding method used for the encrypted data and information regarding encryption;
a header converting unit operable to convert the obtained value according to a predetermined conversion rule and to replace the value described in the field with the converted value;
a decrypting unit operable to decrypt the encrypted data out of the encoded image data, audio data, and the text data included in the data section of the file; and
a decoding unit operable to determine the encoding method used for the data by reference to the field in which the value has been replaced and to decode the decrypted data.

12. The data reproducing apparatus according to Claim 11,
wherein said header converting unit is operable to convert the obtained value through a bit inversion.

13. The data reproducing apparatus according to Claim 12,
wherein said header converting unit is operable to change a bit position in the obtained value at which the bit inversion is to be performed, according to the information regarding the encryption.

14. The data reproducing apparatus according to Claim 12,
wherein said header converting unit is operable to change a bit inversion formula to be used for the bit inversion, according to the information regarding the encryption.

15. The data reproducing apparatus according to Claim 11,
wherein the conversion rule is represented by a conversion table in which the obtained value is recorded in association with the converted value.

16. An encrypting method of encrypting at least one of encoded image data, audio data, and text data, comprising:
a file reading step of obtaining a file which has a data section including the encoded image data, audio data, and text data and a header section including a header of the data section;
an encrypting step of encrypting at least one of the encoded image data, audio data, and text data included in the data section of the file;
a header analyzing step of analyzing the header section of the file and obtaining a value described in a field that is included in the header section to show an encoding method used for data to be encrypted in said encrypting step;
a header converting step of converting the obtained value according to a predetermined conversion rule and replacing the value described in the field with the converted value; and
a file outputting step of outputting a file having a header section including a field in which the value has been replaced and a data section including the encrypted data.

17. A decrypting method of decrypting encrypted data, the encrypted data being at least one of encoded image data, audio data, and text data, said decrypting method comprising:
a file reading step of obtaining a file which has a data section including the encoded image data, audio data, and text data and a header section including a header of the data section;
a header analyzing step of analyzing the header section of the file and obtaining a value described in a field that is included in the header section to show an encoding method used for the encrypted data and information regarding encryption;
a header converting step of converting the obtained value according to a predetermined conversion rule and replacing the value described in the field with the converted value;
a decrypting step of decrypting the encrypted data out of the encoded image data, audio data, and the text data included in the data section of the file; and
a file outputting step of outputting a file having a header section including a field in which the value has been replaced and a data section including the decrypted data.

18. A data reproducing method of decrypting and decoding encrypted data for reproduction, the encrypted data being at least one of encoded image data, audio data, and text data, said data reproducing method comprising:
a file reading step of obtaining a file which has a data section including the encoded image data, audio data, and text data and a header section including a header of the data section;
a header analyzing step of analyzing the header section of the file and obtaining a value described in a field that is included in the header section to show an encoding method used for the encrypted data and information regarding encryption;
a header converting step of converting the obtained value according to a predetermined conversion rule and replacing the value described in the field with the converted value;
a decrypting step of decrypting the encrypted data out of the encoded image data, audio data, and the text data included in the data section of the file; and
a decoding step of determining the encoding method used for the data by reference to the field in which the value has been replaced and decoding the decrypted data.

19. A program for an encrypting apparatus which encrypts at least one of encoded image data, audio data, and text data, said program causing a computer to execute:
a file reading step of obtaining a file which has a data section including the encoded image data, audio data, and text data and a header section including a header of the data section;
an encrypting step of encrypting at least one of the encoded image data, audio data, and text data included in the data section of the file;
a header analyzing step of analyzing the header section of the file and obtaining a value described in a field that is included in the header section to show an encoding method used for data to be encrypted in said encrypting step;
a header converting step of converting the obtained value according to a predetermined conversion rule and replacing the value described in the field with the converted value; and
a file outputting step of outputting a file having a header section including a field in which the value has been replaced and a data section including the encrypted data.

20. A program for a decrypting apparatus which decrypts encrypted data, the encrypted data being at least one of encoded image data, audio data, and text data, said program causing a computer to execute:
a file reading step of obtaining a file which has a data section including the encoded image data, audio data, and text data and a header section including a header of the data section;
a header analyzing step of analyzing the header section of the file and obtaining a value described in a field that is included in the header section to show an encoding method used for the encrypted data and information regarding encryption;
a header converting step of converting the obtained value according to a predetermined conversion rule and replacing the value described in the field with the converted value;
a decrypting step of decrypting the encrypted data out of the encoded image data, audio data, and the text data included in the data section of the file; and
a file outputting step of outputting a file having a header section including a field in which the value has been replaced and a data section including the decrypted data.

21. A program for a data reproducing apparatus which decrypts and decodes encrypted data for reproduction, the encrypted data being at least one of encoded image data, audio data, and text data, said program causing a computer to execute:
a file reading step of obtaining a file which has a data section including the encoded image data, audio data, and text data and a header section including a header of the data section;
a header analyzing step of analyzing the header section of the file and obtaining a value described in a field that is included in the header section to show an encoding method used for the encrypted data and information regarding encryption;
a header converting step of converting the obtained value according to a predetermined conversion rule and replacing the value described in the field with the converted value;
a decrypting step of decrypting the encrypted data out of the encoded image data, audio data, and the text data included in the data section of the file; and
a decoding step of determining the encoding method used for the data by reference to the field in which the value has been replaced and decoding the decrypted data.

22. A computer-readable recording medium on which a file is recorded, said file including:
a data section which includes encrypted data, the encrypted data being at least one of encoded image data, audio data, and text data; and
a header section which includes a header of the data section,
wherein the header section includes a field showing an encoding method used for the encrypted data and information regarding encryption.
